# EUROPEAN PATENT SPECIFICATION

(11) **EP 3 422 158 B1**
(45) Date of publication and mention of the grant of the patent: **26.02.2020**
(21) Application number: 17178671.8
(22) Date of filing: 29.06.2017
(51) Int. Cl.: G06F 3/041, G06F 3/042

(54) **TOUCH SENSITIVE USER INTERFACE AND METHOD FOR OPERATING A TOUCH SENSITIVE USER INTERFACE**
BERÜHRUNGSEMPFINDLICHE BENUTZERSCHNITTSTELLE UND VERFAHREN ZUM BETRIEB EINER BERÜHRUNGSEMPFINDLICHEN BENUTZERSCHNITTSTELLE
INTERFACE UTILISATEUR TACTILE ET PROCÉDÉ DE FONCTIONNEMENT D'UNE INTERFACE UTILISATEUR TACTILE

(43) Date of publication of application: 02.01.2019
(73) Proprietor: Vestel Elektronik Sanayi ve Ticaret A.S., 45030 Manisa (TR)
(72) Inventor: YILMAZLAR, Ismail, 45030 Manisa (TR)
(74) Representative: Ascherl, Andreas

(56) References cited:
- US-A- 5 378 069
- US-A1- 2010 321 309
- US-A1- 2011 084 939
- YILMAZLAR I ET AL: "Implementation of a Current Drive Modulator for Effective Speckle Suppression in a Laser Projection System", IEEE PHOTONICS JOURNAL, IEEE, USA, vol. 7, no. 5, 1 October 2015 (2015-10-01) , pages 1-6, XP011670419, DOI: 10.1109/JPHOT.2015.2478697 [retrieved on 2015-09-30]

## Description

### TECHNICAL FIELD

The invention relates to a touch sensitive user interface and to a method for operating a touch sensitive user interface.

### BACKGROUND OF THE INVENTION

Although applicable to any touch sensitive device, the present invention will mainly be described in conjunction with touch screen devices.

In modern electronic applications often a user interaction is required to perform certain actions. User may e.g. be provided with a graphical user interface on a display and may select elements in the graphical user interface or input information into elements of the graphical user interface.

Therefore, in electronic devices that require user interaction a touch screen device may be used to allow the user to interact with the electronic device. Such a device may e.g. be an information screen in a public place.

There exist different touch screen technologies, like e.g. resistive touch screens, surface acoustic wave touch screens, capacitive touch screens, infrared touch screens and the like.

For big screen applications infrared touch screens may be advantageously used, since the elements of the touch sensitive device may be provided around the display. Such infrared touch screens may however suffer from incident infrared light.

Document US 5 378 069 A discloses a keyboard without moving parts that uses rows of emitters and detectors. Document US 2010/0 321 309 A1 discloses a touch screen with touch units that are disposed besides a displaying surface and include a light source and an image sensor. Document US 2011 / 0 084 939 A1 discloses a touch screen electronics for detecting touches on a display with a plurality of transmitters, receivers and a controller.

There is a need for infrared touch screens with increased resistivity against incident infrared light.

### SUMMARY OF THE INVENTION

The present invention provides a touch sensitive user interface according to claim 1 and a method for operating a touch sensitive user interface according to claim 7. The embodiments described below are examples for better understanding the invention. Embodiments which do not fall within the scope of the claims do not describe part of the present invention.

The present invention is based on the finding that constantly driving the infrared light sources with the same driving signal may make the arrangement more prone to malfunctions caused by incident infrared light.

The present invention takes this finding into account and provides a touch sensitive user interface for a display device that allows changing the driving signal of the infrared light sources during operation of the touch sensitive user interface.

Usually, in infrared based touch sensitive user interfaces a plurality of infrared light sources will be placed opposite to a plurality of infrared receivers. There may exist a 1:1 mapping, i.e. one infrared light source is provided per infrared receiver. The infrared light sources may then be activated one after the other and it is verified if the respective infrared receiver receives the infrared light.

If the respective infrared receiver does not receive the infrared light from the corresponding infrared light source the path must be blocked and a touch input may be detected.

In infrared based touch sensitive user interfaces the control unit may therefore control the driving signal for the infrared light sources such that the light sources are illuminated one after the other. The control unit may then analyze if the respective infrared receiver receives the emitted infrared light, in each case.

However, if e.g. sunlight with an infrared component irradiates onto the infrared receivers, even with e.g. a finger or the like blocking the path between the respective infrared light source and the respective infrared receiver, the infrared receiver will receive infrared light and output a respective signal. The control unit will therefore not be able to determine a touch event or input. The same applies to infrared light being e.g. emitted by LED lights or fluorescent lights that may generate infrared light e.g. with an on/off keying frequency of 50 Hz or 60 Hz.

The control unit may therefore permanently analyze the signals that are received by the infrared receivers. This analysis may refer to analyzing the signals for the occurrence of any interference that may degrade the operation of the touch sensitive user interface, e.g. sunlight.

In case that the control unit detects such an interference, the control unit may modify the modulation of the driving signal to avoid the interference.

Therefore, with the arrangement of the present invention, a more robust and stable infrared based touch sensitive user interface may be provided.

It is understood, that the control unit may e.g. be a dedicated user interface controller, e.g. a dedicated IC that is coupled to the infrared receivers and the infrared light sources. As an alternative, the control unit may also be provided e.g. as a function or part of any other control device or controller that may be present in the display device that uses the touch sensitive user interface.

Further embodiments of the present invention are subject of the further subclaims and of the following description, referring to the drawings.

In one embodiment, the control unit may be configured to analyze the received signals by activating a single one of the infrared light sources and verifying the number of infrared receivers that receive the infrared light emitted by the respective infrared light source.

Infrared light will usually not only influence a single one of the infrared receivers but all or a majority of the infrared receivers. The light emitted by the infrared light sources in contrast will only irradiate on a limited number of the infrared receivers.

The control unit may therefore e.g. analyze for every infrared light source, if more than one or more than the expected ones of the infrared receivers receive infrared light. In case that more than one or more than the expected ones of the infrared receivers receive infrared light, the control unit may assume that interfering infrared light is present.

The control unit may perform this test for every type of modulation.

In another embodiment, the control unit may be configured to analyze the received signals by verifying if the received signals comprise the modulation currently used to drive the infrared light sources.

Interfering infrared light will usually cover or overlap the signals emitted by the infrared light sources. The modulation of the signals as emitted by the infrared light sources may therefore also be covered or overlapped.

If for example an infrared light source emits infrared light modulated with a specific frequency (on/off keying) or of a specific frequency (wavelength), a constant sunlight may cover or hide the specific frequency and provide a signal in the infrared receivers with a permanent high level.

The control unit may therefore detect interferences by verifying the modulation of the received signals compared to the modulation of the emitted signals.

In one embodiment, the control unit may be configured to provide the driving signals for the infrared light sources as constant current modulated driving signals, i.e. with a constant current value.

A constant current may easily be provided by the control unit with little effort. The control unit may e.g. simply activate an output pin that controls the driving signal for a specific infrared light source for the duration of the activation of the respective infrared light source. The control unit may perform this for all infrared light sources in a predetermined sequence.

In a further embodiment, the control unit may be configured to provide the driving signals for the infrared light sources modulated with a square wave modulation of a predefined frequency.

Generating a square wave modulation of a predetermined frequency requires a little bit more computational power than generating a constant current modulated signal. However, with such a square wave depending on the type of infrared light source, the emitted infrared light may be easily delimited against e.g. constant infrared interferences. The received signal may then e.g. be high pass filtered to extract or separate the modulated infrared light that was emitted by the respective infrared light source.

In one embodiment, the control unit may be configured to provide the driving signals for the infrared light sources modulated with a triangular wave modulation of a predefined frequency.

A triangular wave driving signal will cause the infrared light sources to emit another characteristic infrared light signal that may be separated from the interference signals, e.g. by filters or the like.

In another embodiment, the infrared light sources may comprise infrared laser diodes.

It is understood, that infrared LEDs may also be used as light sources. However, infrared laser diodes may be advantageously used with the present invention. It is understood, that infrared laser diodes may comprise various modes due to their mode hoping nature. An exemplary infrared laser diode may e.g. comprise five independent longitudinal lasing modes in a drive current range of 40-85 mA.

In combination with the above mentioned three modulation modes, the infrared laser diode may be excited to output an infrared laser signal with either one mode, two modes or all five modes.

With the constant current modulation, an infrared signal will be provided that arises from the longitudinal mode that corresponds to the respective current. With the square wave modulation, the infrared signal will be the superposition of two independent modes, i.e. the mode corresponding to the minimum current value and the mode corresponding to the maximum current value. With the triangular wave modulation all the modes of the infrared laser diode that reside between the maximum current and the minimum current will be excited and superimposed.

Therefore, depending on the type of modulation, an infrared laser diode may emit infrared light of different wavelengths.

In one embodiment, the control unit may comprise a constant current source and a modulation circuit, wherein the constant current source may be coupled to the infrared laser diodes and wherein the modulation circuit may be arranged in a supply line of the infrared laser diodes.

The modulation of the driving signal, i.e. the driving current of the infrared laser diodes, may be provided with two elements. The constant current source may e.g. be provided to supply the maximum required current. The modulation circuit may then modulate that current according to the required modulation scheme. It is understood, that with the infrared laser diodes the modulated driving signal may be a current modulated driving signal.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a touch sensitive user interface according to the present invention;
Fig. 2 shows a block diagram of another embodiment of a touch sensitive user interface according to the present invention;
Fig. 3 shows a block diagram of another embodiment of a touch sensitive user interface according to the present invention;
Fig. 4 shows a block diagram of another embodiment of a touch sensitive user interface according to the present invention;
Fig. 5 shows a flow diagram of an embodiment of a method according to the present invention;
Fig. 6 shows a flow diagram of another embodiment of a method according to the present invention; and
Fig. 7 shows a flow diagram of another embodiment of a method according to the present invention.

In the figures like reference signs denote like elements unless stated otherwise.

### DETAILED DESCRIPTION OF THE DRAWINGS

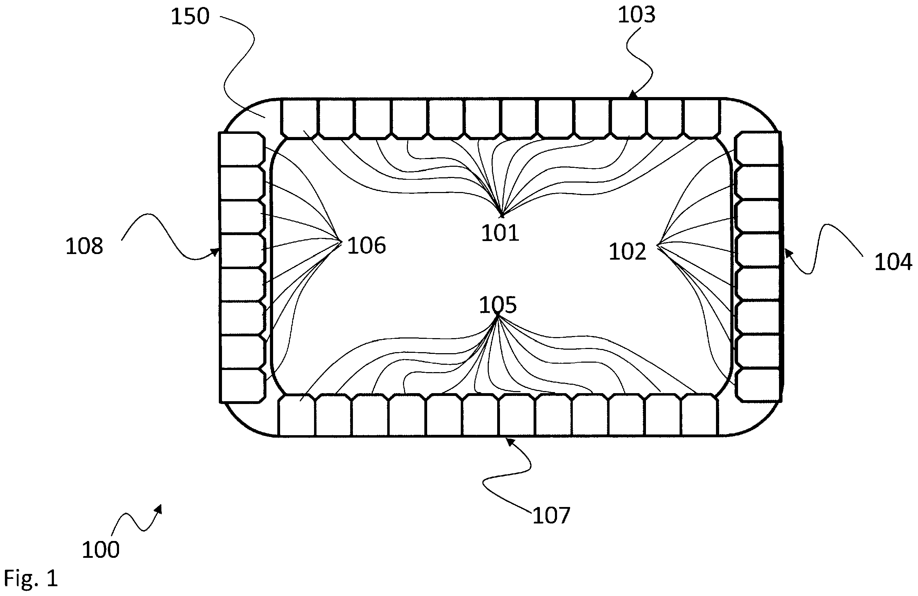

Fig. 1 shows a block diagram of a touch sensitive user interface 100 for a display device 150. The display device 150 may e.g. be a TFT display or the like. The touch sensitive user interface 100 comprises a plurality of infrared receivers 101, 102. The infrared receivers 101, 102 are distributed in two groups. The first group of infrared receivers 101 is arranged on a first edge 103 of the display device 150, the top edge. The second group of infrared receivers 102 is arranged on a second edge 104 of the display device 150, the right edge. The second edge 104 is orthogonal to the first edge 103.

Further, the touch sensitive user interface 100 comprises a plurality of infrared light sources 105, 106. The infrared light sources 105, 106 are also distributed in two groups. The first group of infrared light sources 105 is arranged on a third edge of the display device 150, the lower edge, opposite to the first edge 103. The second group of infrared light sources 106 is arranged on a fourth edge of the display device 150, the left edge.

During operation of the touch sensitive user interface 100 the infrared light sources 105 will emit infrared light for the infrared receivers 101. The infrared light sources 106 will emit light for the infrared receivers 102. If a user touches the display device 150 e.g. with his finger or a stylus or a pen, the transmission path for the infrared light will be blocked at that position in vertical and horizontal direction.

The light emitted from one of the infrared light sources 105 will therefore not reach the respective one of the infrared receivers 101. This allows determining the horizontal or X-position of the touch event. The light emitted from one of the infrared light sources 106 will therefore not reach the respective one of the infrared receivers 102. This allows determining the vertical or Y-position of the touch event.

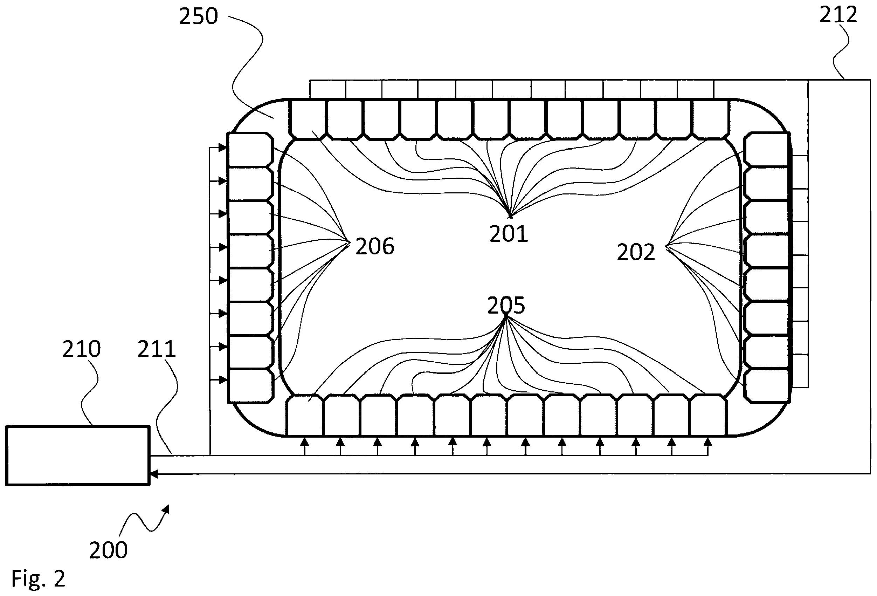

However, as already indicated above, incident infrared light, e.g. sunlight or light of a LED or fluorescent lamp, may still provide a signal at the respective ones of the infrared receivers 101, 102, even if a user touches the display device 150. Therefore, the present invention provides the control unit as described in conjunction with Fig. 2.

Fig. 2 shows a block diagram of another touch sensitive user interface 200. The touch sensitive user interface 200 is based on the touch sensitive user interface 100. Therefore, the touch sensitive user interface 200 also comprises a plurality of infrared receivers 201, 202. The infrared receivers 201, 202 are distributed in two groups. The first group of infrared receivers 201 is arranged on a first edge of the display device 250, the top edge. The second group of infrared receivers 202 is arranged on a second edge of the display device 250, the right edge. The second edge is orthogonal to the first edge.

Further, the touch sensitive user interface 200 comprises a plurality of infrared light sources 205, 206, in this case infrared laser diodes. The infrared light sources 205, 206 are also distributed in two groups. The first group of infrared light sources 205 is arranged on a third edge of the display device 250, the lower edge, opposite to the first edge 203. The second group of infrared light sources 206 is arranged on a fourth edge of the display device 250, the left edge.

In the touch sensitive user interface 200 the control unit 210 provides driving signals 211 for the infrared light sources 205, 206. Although a single signal line is shown in Fig. 2, it is understood that every one of the infrared light sources 205, 206 may be individually controlled by the control unit 210.

The control unit 210 is further coupled to the infrared receivers 201, 202. The infrared receivers 201, 202 will receive the infrared light from the infrared light sources 205, 206 and provide respective signals 212. The control unit 210 will then evaluate the signals 212 to determine if a touch event may be present. In addition, the control unit 210 will also analyze the signals 212 for the occurrence of interferences that may e.g. be caused by irradiant infrared light from the sun or artificial light sources.

If the control unit 210 detects such interferences, the control unit 210 may change the type of modulation of the infrared light sources 205, 206. The control unit 210 may e.g. activate single ones of the infrared light sources 205, 206 and then verify the number of infrared receivers 201, 202 that receive the infrared light emitted by the respective infrared light source 205, 206. If only the predetermined infrared receivers 201, 202 receive the infrared light, no interference is present. This type of analysis may be performed during normal operation of the touch sensitive user interface 200.

In addition or an alternative, the control unit 210 may verify if the received signals 212 comprise the modulation currently used in the driving signal 211 used to drive the infrared light sources 205, 206. If the respective modulation is detected, no interference is present. In case of infrared laser diodes as infrared light sources 205, 206, it may be verified if light according to the stimulated modes is received. If more than one mode is stimulated, the reception of light of a single mode may be sufficient to detect a touch event. This type of analysis may also be performed during normal operation of the touch sensitive user interface 200.

Since in the touch sensitive user interface 200 the infrared light sources 205, 206 are infrared laser diodes, different modulations of the driving signals 211 may trigger different modes in the infrared light sources 205, 206.

The control unit 210 may provide the driving signals 211 for the infrared light sources 205, 206 e.g. as constant current modulated driving signals 211, and/or as driving signals 211 modulated with a square wave modulation of a predefined frequency and/or as driving signals 211 modulated with a triangular wave modulation of a predefined frequency.

The infrared light sources 205, 206 will therefore emit light based on a single mode in the case of a constant current driving signal 211. In case of a square wave modulation, the infrared light sources 205, 206 will emit light based on two modes that are defined by the two current levels. Finally, the infrared light sources 205, 206 will emit light based on all modes that are stimulated between the minimum and maximum current of the driving signal 211.

Therefore, by changing the type of modulation, infrared light will be generated based on different modes of the infrared light sources 205, 206 and interferences may be avoided.

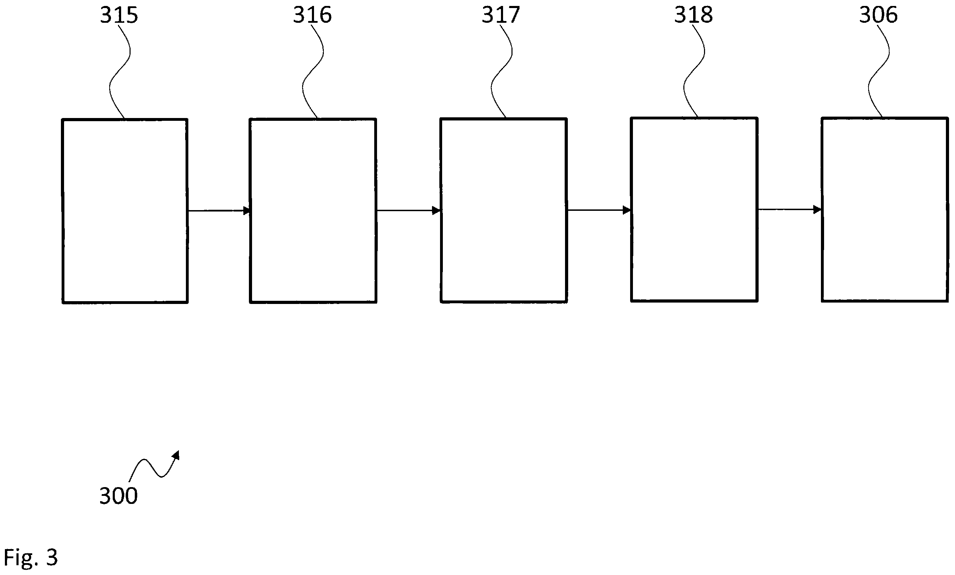

Fig. 3 shows a block diagram of another embodiment of a touch sensitive user interface 300. The touch sensitive user interface 300 serves to show a possible abstract topology according to the present invention. The touch sensitive user interface 300 comprises current source 315 that is coupled to the modulation circuit 316. The modulation circuit 316 is coupled to a current limiter 317 that is coupled to an over voltage and reverse voltage protection circuit 318. The over voltage and reverse voltage protection circuit 318 is coupled to the infrared light source 306.

The current source 315 provides the driving current for the infrared light source 306. The driving current is modulated by the modulation circuit 316 and provided to the infrared light source 306. However, prior to driving the infrared light source 306, the modulated driving current is limited by the current limiter 317 to prevent an overloading of the infrared light source 306. Finally, the over voltage and reverse voltage protection circuit 318 protects the infrared light source 306 from erroneous external connections and overvoltages.

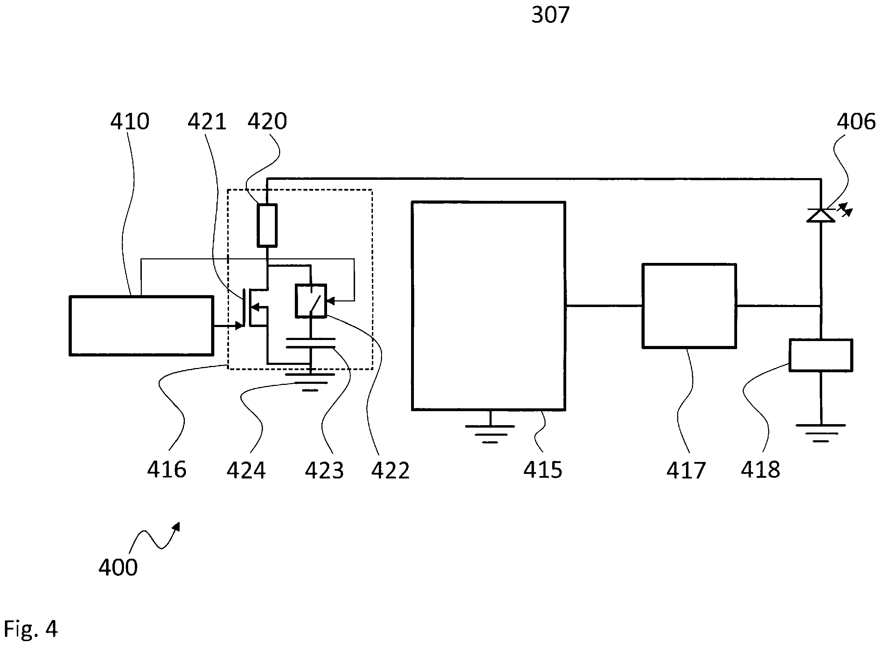

Fig. 4 shows a block diagram of another touch sensitive user interface 400, especially the driving section of the touch sensitive user interface 400. The touch sensitive user interface 400 comprises a current source 415 that provides a driving current for driving the infrared light source 406, also an infrared laser diode. The current source 415 is coupled to a current limiter 417 that limits the current prior to providing it to the anode of the infrared light source 406. The anode of the infrared light source 406 is further coupled to the over voltage and reverse voltage protection circuit 418, e.g. comprising a Z-diode.

The cathode of the infrared light source 406 is coupled to the modulation circuit 416. The modulation circuit 416 comprises a resistor 420 coupled to the cathode of the infrared light source 406. The other end of the resistor 420 is coupled to a power input of a transistor 421, here exemplarily a FET transistor, and a switch 422 that lies in series with a capacitor 423 and ground 424. The power output of the transistor 421 is also coupled to ground 424. Finally, a control output of the control unit 410 is coupled to the control input of the transistor 421. Further, the control unit 410 controls the switch 422.

The control unit 410 may simply change the type of modulation of the current for the infrared light source 406 by controlling the transistor 421. If the control unit 410 simply turns on the transistor 421 with the switch 422 opened, a constant current modulation may be provided. If the control unit 410 turns on and off the transistor 421 with a predetermined frequency with the switch 422 opened, a square wave or current modulation may be provided. Finally, if the control unit 410 turns on and off the transistor 421 with a predetermined frequency with the switch 422 closed, a triangular wave modulation may be provided.

Although only shown for a single infrared light source 406, it is understood, that the control unit 410 may provide control signals for a plurality of modulation circuits 416 that each control a single one of the infrared light source 406. Alternatively a switching matrix may be provided that sequentially couples the infrared light sources 406 with the modulation circuit 416.

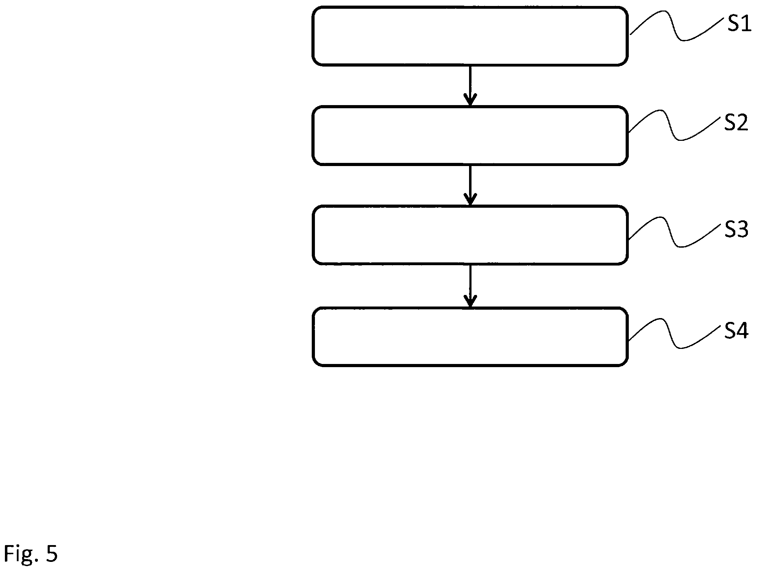

For sake of clarity in the following description of the method based Figs. 5 to 7 the reference signs used above in the description of apparatus based Figs. 1 - 4 will be maintained.

Fig. 5 shows a flow diagram of a method for operating a touch sensitive user interface 100, 200, 300, 400 with a plurality of infrared receivers 101, 102, 201, 202 and a plurality of infrared light sources 105, 106, 205, 206, 306, 406 arranged on at least two opposite edges of a display device 150, 250.

The method comprises driving S1 the plurality of infrared light sources 105, 106, 205, 206, 306, 406 with a driving signal 211, e.g. a current based driving signal. Further, the method comprises receiving S2 infrared light from the infrared light sources 105, 106, 205, 206, 306, 406 with the infrared receivers 101, 102, 201, 202, analyzing S3 signals received by the infrared receivers 101, 102, 201, 202 for interferences, and adapting S4 a modulation of the driving signals 211 of the infrared light sources 105, 106, 205, 206, 306, 406 based on a result of the analysis of the signals received by the infrared receivers 101, 102, 201, 202.

Analyzing S3 may e.g. comprise sequentially activating single ones of the infrared light sources 105, 106, 205, 206, 306, 406 and verifying the number of infrared receivers 101, 102, 201, 202 that receive the infrared light emitted by the respective infrared light source 105, 106, 205, 206, 306, 406. In addition or as alternative, analyzing S3 may comprise verifying if the received signals 212 comprise the modulation currently used in the driving signal 211 used to drive the infrared light sources 105, 106, 205, 206, 306, 406.

Adapting S4 may comprise providing the driving signals 211 for the infrared light sources 105, 106, 205, 206, 306, 406 with constant current modulation, and/or providing the driving signals 211 for the infrared light sources 105, 106, 205, 206, 306, 406 with a square wave modulation of a predefined frequency and/or with a triangular wave modulation of a predefined frequency.

Driving S1 may comprise driving infrared laser diodes, e.g. with a constant current source 315, 415 and a modulation circuit 316, 416.

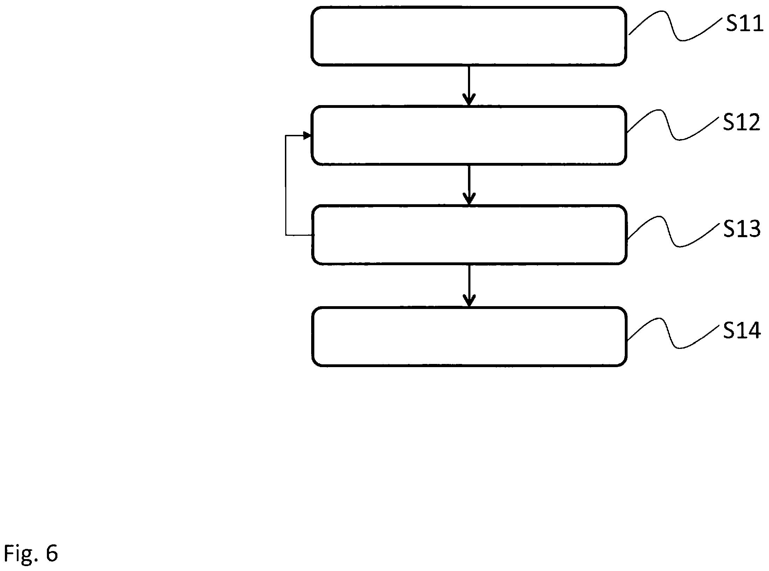

Fig. 6 shows a flow diagram of another method according to the present invention, especially the operation of the control unit 210, 410.

In step S11 the control unit 210, 410 determines a malfunction of the touch sensitive user interface 100, 200, 300, 400 based on interference. In S12 the control unit 210, 410 selects another modulation for the infrared light sources 105, 106, 205, 206, 306, 406, e.g. a direct current modulation, a square wave modulation or a triangular wave modulation. In step S13 the control unit 210, 410 verifies if the malfunction or interference still exists. If yes, the control unit 210, 410 will go back to step S12 and select another type of modulation. If the malfunction is eliminated, the control unit 210, 410 continues with normal operation in step S14.

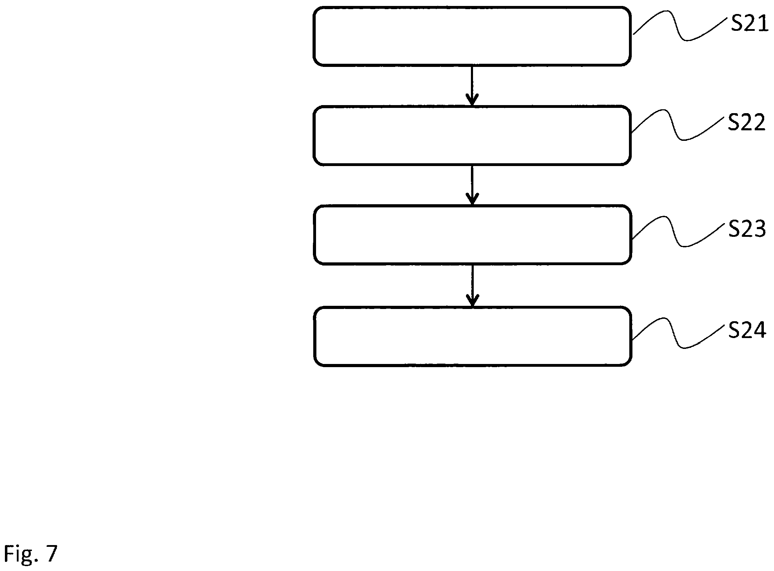

Fig. 7 shows a flow diagram of another method according to the present invention, especially the operation of the control unit 210, 410. The method in Fig. 7 may be seen as alternative to the method in Fig. 6.

In step S21 the control unit 210, 410 determines a malfunction of the touch sensitive user interface 100, 200, 300, 400 based on interference. In S22 the control unit 210, 410 selects the triangular wave modulation for the infrared light sources 105, 106, 205, 206, 306, 406. In step S23 the control unit 210, 410 evaluates all modes of the infrared light sources 105, 106, 205, 206, 306, 406 to detect touch events. If the malfunction is eliminated, the control unit 210, 410 continues with normal operation in step S24.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment.

### List of reference signs

- 100, 200, 300, 400: touch sensitive user interface
- 101, 102, 201, 202: infrared receivers
- 103, 104: edge
- 105, 106, 205, 206, 306, 406: infrared light sources
- 107,108: edge

- 210, 410: control unit
- 211: driving signals
- 212: received signals

- 315,415: current source
- 316, 416: modulation circuit
- 317,417: current limiter
- 318, 418: protection circuit

- 420: resistor
- 421, 422: switch
- 423: capacitor
- 424: ground

- 150, 250: display device

- S1 - S4: method steps
- S11 - S14: method steps
- S21 - S24: method steps

## Claims

1. Touch sensitive user interface (100, 200, 300, 400) comprising:
a display device (150, 250),
a plurality of infrared receivers (101, 102, 201, 202) arranged on at least one first edge (103, 104) of the four edges of the display device (150, 250),
a plurality of infrared light sources (105, 106, 205, 206, 306, 406) arranged on at least one second edge (107, 108) of the four edges of the display device (150, 250) that is opposite to the first edge (103, 104), and
a control unit (210, 410) configured to analyze signals received by the infrared receivers (101, 102, 201, 202) for interferences and to adapt a modulation of driving signals (211) of the infrared light sources (105, 106, 205, 206, 306, 406) based on a result of the analysis of the signals received by the infrared receivers (101, 102, 201, 202),
wherein the control unit (210, 410) is configured to adapt the modulation by providing the driving signals (211) for the infrared light sources (105, 106, 205, 206, 306, 406) modulated with a triangular wave modulation of a predefined frequency, and wherein the infrared light sources (105, 106, 205, 206, 306, 406) comprise infrared laser diodes.

2. Touch sensitive user interface (100, 200, 300, 400) according to claim 1, wherein the control unit (210, 410) is configured to analyze the received signals (212) by activating single ones of the infrared light sources (105, 106, 205, 206, 306, 406) and verifying the number of infrared receivers (101, 102, 201, 202) that receive the infrared light emitted by the respective infrared light source (105, 106, 205, 206, 306, 406).

3. Touch sensitive user interface (100, 200, 300, 400) according to any one of the preceding claims, wherein the control unit (210, 410) is configured to analyze the received signals (212) by verifying if the received signals (212) comprise the modulation currently used in the driving signal (211) used to drive the infrared light sources (105, 106, 205, 206, 306, 406).

4. Touch sensitive user interface (100, 200, 300, 400) according to any one of the preceding claims, wherein the control unit (210, 410) is configured to adapt the modulation by providing the driving signals (211) for the infrared light sources (105, 106, 205, 206, 306, 406) as constant current modulated driving signals (211) with a constant current.

5. Touch sensitive user interface (100, 200, 300, 400) according to any one of the preceding claims, wherein the control unit (210, 410) is configured to adapt the modulation by providing the driving signals (211) for the infrared light sources (105, 106, 205, 206, 306, 406) modulated with a square wave modulation of a predefined frequency.

6. Touch sensitive user interface (100, 200, 300, 400) according to claim 1, wherein the control unit (210, 410) comprises a constant current source (315, 415) and a modulation circuit (316, 416), wherein the constant current source (315, 415) is coupled to the infrared laser diodes and wherein the modulation circuit (316, 416) is arranged in a supply line of the infrared laser diodes.

7. Method for operating a touch sensitive user interface (100, 200, 300, 400) with a plurality of infrared receivers (101, 102, 201, 202) and a plurality of infrared light sources (105, 106, 205, 206, 306, 406) arranged on at least two opposite edges of a display device (150, 250), the method comprising:
driving (S1) the plurality of infrared light sources (105, 106, 205, 206, 306, 406) with a driving signal (211),
receiving (S2) infrared light from the infrared light sources (105, 106, 205, 206, 306, 406) with the infrared receivers (101, 102, 201, 202),
analyzing (S3) signals received by the infrared receivers (101, 102, 201, 202) for interferences, and
adapting (S4) a modulation of the driving signals (211) of the infrared light sources (105, 106, 205, 206, 306, 406) based on a result of the analysis of the signals received by the infrared receivers (101, 102, 201, 202),
wherein adapting (S4) comprises providing the driving signals (211) for the infrared light sources (105, 106, 205, 206, 306, 406) with a triangular wave modulation of a predefined frequency, and wherein the infrared light sources (105, 106, 205, 206, 304, 406) comprise infrared laser diodes.

8. Method according to claim 7, wherein analyzing (S3) comprises sequentially activating single ones of the infrared light sources (105, 106, 205, 206, 306, 406) and verifying the number of infrared receivers (101, 102, 201, 202) that receive the infrared light emitted by the respective infrared light source (105, 106, 205, 206, 306, 406).

9. Method according to any one of the preceding claims 7 and 8, wherein analyzing (S3) comprises verifying if the received signals (212) comprise the modulation currently used in the driving signal (211) used to drive the infrared light sources (105, 106, 205, 206, 306, 406).

10. Method according to any one of the preceding claims 7 to 9, wherein adapting (S4) comprises providing the driving signals (211) for the infrared light sources (105, 106, 205, 206, 306, 406) with constant current modulation.

11. Method according to any one of the preceding claims 7 to 10, wherein adapting (S4) comprises providing the driving signals (211) for the infrared light sources (105, 106, 205, 206, 306, 406) with a square wave modulation of a predefined frequency.

12. Method according to any one of the preceding claims 7 to 11, wherein driving (S1) comprises driving the infrared laser diodes with a constant current source (315, 415) and a modulation circuit (316, 416), wherein the constant current source (315, 415) is coupled to the infrared laser diodes and wherein the modulation circuit (316, 416) is arranged in a supply line of the infrared laser diodes.

## Patentansprüche

1. Berührungsempfindliche Benutzeroberfläche (100, 200, 300, 400), umfassend:
eine Anzeigevorrichtung (150, 250),
eine Vielzahl von Infrarot-Empfängern (101, 102, 201, 202), die an mindestens einer ersten Kante (103, 104) der vier Kanten der Anzeigevorrichtung (150, 250) angeordnet sind,
eine Vielzahl von Infrarot-Lichtquellen (105, 106, 205, 206, 306, 406), die an mindestens einer zweiten Kante (107, 108) der vier Kanten der Anzeigevorrichtung (150, 250) angeordnet sind, die der ersten Kante (103, 104) gegenüberliegt, und
eine Steuereinheit (210, 410), die konfiguriert ist, um von den Infrarot-Empfängern (101, 102, 201, 202) empfangene Signale auf Störungen zu analysieren und eine Modulation von Steuersignalen (211) der Infrarot-Lichtquellen (105, 106, 205, 206, 306, 406) basierend auf einem Ergebnis der Analyse der von den Infrarot-Empfängern (101, 102, 201, 202) empfangenen Signale anzupassen,
wobei die Steuereinheit (210, 410) konfiguriert ist, um die Modulation anzupassen, indem sie die Steuersignale (211) für die Infrarot-Lichtquellen (105, 106, 205, 206, 306, 406) bereitstellt, die mit einer Dreieckwellenmodulation einer vorbestimmten Frequenz moduliert sind, und wobei die Infrarot-Lichtquellen (105, 106, 205, 206, 306, 406) Infrarot-Laserdioden umfassen.

2. Berührungsempfindliche Benutzeroberfläche (100, 200, 300, 400) nach Anspruch 1, wobei die Steuereinheit (210, 410) konfiguriert ist, um die empfangenen Signale (212) zu analysieren, indem sie einzelne der Infrarot-Lichtquellen (105, 106, 205, 206, 306, 406) aktiviert und die Anzahl der Infrarot-Empfänger (101, 102, 201, 202) überprüft, die das von der jeweiligen Infrarot-Lichtquelle (105, 106, 205, 206, 306, 406) emittierte Infrarotlicht empfangen.

3. Berührungsempfindliche Benutzerschnittstelle (100, 200, 300, 400) nach einem der vorhergehenden Ansprüche, wobei die Steuereinheit (210, 410) konfiguriert ist, um die empfangenen Signale (212) zu analysieren, indem sie überprüft, ob die empfangenen Signale (212) die Modulation umfassen, die derzeit in dem Antriebssignal (211) verwendet wird, das zum Antreiben der Infrarotlichtquellen (105, 106, 205, 206, 306, 406) verwendet wird.

4. Berührungsempfindliche Benutzerschnittstelle (100, 200, 300, 400) nach einem der vorhergehenden Ansprüche, wobei die Steuereinheit (210, 410) konfiguriert ist, um die Modulation anzupassen, indem sie die Steuersignale (211) für die Infrarot-Lichtquellen (105, 106, 205, 206, 306, 406) als konstantstrommodulierte Steuersignale (211) mit einem konstanten Strom bereitstellt.

5. Berührungsempfindliche Benutzerschnittstelle (100, 200, 300, 400) nach einem der vorhergehenden Ansprüche, wobei die Steuereinheit (210, 410) konfiguriert ist, um die Modulation anzupassen, indem sie die Steuersignale (211) für die Infrarot-Lichtquellen (105, 106, 205, 206, 306, 406) mit einer Rechteckwellenmodulation mit einer vorbestimmten Frequenz moduliert bereitstellt.

6. Berührungsempfindliche Benutzerschnittstelle (100, 200, 300, 400) nach Anspruch 1, wobei die Steuereinheit (210, 410) eine Konstantstromquelle (315, 415) und eine Modulationsschaltung (316, 416) umfasst, wobei die Konstantstromquelle (315, 415) mit den Infrarot-Laserdioden gekoppelt ist und wobei die Modulationsschaltung (316, 416) in einer Versorgungsleitung der Infrarot-Laserdioden angeordnet ist.

7. Verfahren zum Betreiben einer berührungsempfindlichen Benutzeroberfläche (100, 200, 300, 400) mit einer Vielzahl von Infrarot-Empfängern (101, 102, 201, 202) und einer Vielzahl von Infrarot-Lichtquellen (105, 106, 205, 206, 306, 406), die an mindestens zwei gegenüberliegenden Kanten einer Anzeigevorrichtung (150, 250) angeordnet sind, wobei das Verfahren umfasst:
Antreiben (S1) der Vielzahl von Infrarot-Lichtquellen (105, 106, 205, 206, 306, 406) mit einem Steuersignal (211),
Empfangen (S2) von Infrarotlicht von den Infrarotlichtquellen (105, 106, 205, 206, 306, 406) mit den Infrarot-Empfängern (101, 102, 201, 202),
Analysieren (S3) von Signalen, die von den Infrarot-Empfängern (101, 102, 201, 202) empfangen werden, auf Störungen und
Anpassen (S4) einer Modulation der Steuersignale (211) der Infrarotlichtquellen (105, 106, 205, 206, 306, 406) basierend auf einem Ergebnis der Analyse der von den Infrarot-Empfängern (101, 102, 201, 202) empfangenen Signale,
wobei die Anpassung (S4) das Bereitstellen der Steuersignale (211) für die Infrarot-Lichtquellen (105, 106, 205, 206, 306, 406) mit einer Dreieckswellenmodulation einer vorbestimmten Frequenz umfasst, und wobei die Infrarot-Lichtquellen (105, 106, 205, 206, 306, 406) Infrarot-Laserdioden umfassen.

8. Verfahren nach Anspruch 7, wobei das Analysieren (S3) das sequentielle Aktivieren einzelner der Infrarot-Lichtquellen (105, 106, 205, 206, 306, 406) und das Verifizieren der Anzahl der Infrarot-Empfänger (101, 102, 201, 202) umfasst, die das von der jeweiligen Infrarot-Lichtquelle (105, 106, 205, 206, 306, 406) emittierte Infrarotlicht empfangen.

9. Verfahren nach einem der vorhergehenden Ansprüche 7 und 8, wobei das Analysieren (S3) das Überprüfen umfasst, ob die empfangenen Signale (212) die Modulation umfassen, die derzeit in dem Antriebssignal (211) verwendet wird, das zum Antreiben der Infrarotlichtquellen (105, 106, 205, 206, 306, 406) verwendet wird.

10. Verfahren nach einem der vorhergehenden Ansprüche 7 bis 9, wobei die Anpassung (S4) das Bereitstellen der Steuersignale (211) für die Infrarotlichtquellen (105, 106, 205, 206, 306, 406) mit Konstantstrommodulation umfasst.

11. Verfahren nach einem der vorhergehenden Ansprüche 7 bis 10, wobei die Anpassung (S4) das Bereitstellen der Steuersignale (211) für die Infrarot-Lichtquellen (105, 106, 205, 206, 306, 406) mit einer Rechteckwellenmodulation einer vorbestimmten Frequenz umfasst.

12. Verfahren nach einem der vorhergehenden Ansprüche 7 bis 11, wobei das Antreiben (S1) das Antreiben der Infrarot-Laserdioden mit einer Konstantstromquelle (315, 415) und einer Modulationsschaltung (316, 416) umfasst, wobei die Konstantstromquelle (315, 415) mit den Infrarot-Laserdioden gekoppelt ist und wobei die Modulationsschaltung (316, 416) in einer Versorgungsleitung der Infrarot-Laserdioden angeordnet ist.

## Revendications

1. Interface utilisateur tactile (100, 200, 300, 400) comprenant :
un dispositif d'affichage (150, 250),
une pluralité de récepteurs infrarouges (101, 102, 201, 202) disposés sur au moins un premier bord (103, 104) des quatre bords du dispositif d'affichage (150, 250),
une pluralité de sources de lumière infrarouge (105, 106, 205, 206, 206, 306, 406) disposées sur au moins un deuxième bord (107, 108) des quatre bords du dispositif d'affichage (150, 250) qui est opposé au premier bord (103, 104), et
une unité de commande (210, 410) configurée pour analyser des signaux reçus par les récepteurs infrarouges (101, 102, 201, 202) pour des interférences et pour adapter une modulation des signaux de commande (211) des sources de lumière infrarouge (105, 106, 205, 206, 306, 406) en fonction d'un résultat de l'analyse des signaux reçus par les récepteurs infrarouge (101, 102, 201, 202),
dans laquelle l'unité de commande (210, 410) est configurée pour adapter la modulation en fournissant les signaux de commande (211) pour les sources de lumière infrarouge (105, 106, 205, 206, 306, 406) modulées avec une modulation d'onde triangulaire d'une fréquence prédéfinie, et dans laquelle les sources de lumière infrarouge (105, 106, 205, 206, 306, 406) comprennent des diodes laser infrarouge.

2. Interface utilisateur tactile (100, 200, 300, 400) selon la revendication 1, dans laquelle l'unité de commande (210, 410) est configurée pour analyser les signaux reçus (212) en activant une seule des sources de lumière infrarouge (105, 106, 205, 206, 306, 406) et en vérifiant le nombre de récepteurs infrarouge (101, 102, 201, 202) qui reçoivent la lumière infrarouge émise par les sources respectives (105, 106, 205, 206, 306, 406).

3. Interface utilisateur tactile (100, 200, 300, 400) selon l'une quelconque des revendications précédentes, dans laquelle l'unité de commande (210, 410) est configurée pour analyser les signaux reçus (212) en vérifiant si les signaux reçus (212) comprennent la modulation actuellement utilisée dans le signal de commande (211) utilisé pour commander les sources de lumière infrarouge (105, 106, 205, 206, 306, 406).

4. Interface utilisateur tactile (100, 200, 300, 400) selon l'une quelconque des revendications précédentes, dans laquelle l'unité de commande (210, 410) est configurée pour adapter la modulation en fournissant les signaux de commande (211) pour les sources de lumière infrarouge (105, 106, 205, 206, 306, 406, 406) comme signaux de commande modulés à courant constant (211) avec un courant constant.

5. Interface utilisateur tactile (100, 200, 300, 400) selon l'une quelconque des revendications précédentes, dans laquelle l'unité de commande (210, 410) est configurée pour adapter la modulation en fournissant les signaux de commande (211) pour les sources de lumière infrarouge (105, 106, 205, 206, 306, 406, 406) modulées avec une modulation à ondes carrées d'une fréquence prédéterminée.

6. Interface utilisateur tactile (100, 200, 300, 400) selon la revendication 1, dans laquelle l'unité de commande (210, 410) comprend une source de courant constant (315, 415) et un circuit de modulation (316, 416), dans laquelle la source de courant constant (315, 415) est couplée aux diodes laser infrarouge et le circuit de modulation (316, 416) est disposé dans une conduite d'alimentation des diodes laser infrarouge.

7. Procédé pour faire fonctionner une interface utilisateur tactile (100, 200, 300, 400) avec une pluralité de récepteurs infrarouges (101, 102, 201, 202) et une pluralité de sources de lumière infrarouge (105, 106, 205, 206, 306, 406) disposées sur au moins deux bords opposés d'un dispositif d'affichage (150, 250), le procédé comprenant :
la commande (S1) de la pluralité de sources de lumière infrarouge (105, 106, 205, 206, 306, 406) avec un signal de commande (211),
recevoir (S2) la lumière infrarouge provenant des sources de lumière infrarouge (105, 106, 205, 206, 306, 406) avec les récepteurs infrarouges (101, 102, 201, 202),
analyser les signaux (S3) reçus par les récepteurs infrarouges (101, 102, 201, 202) pour détecter les interférences, et
adaptation (S4) d'une modulation des signaux de commande (211) des sources de lumière infrarouge (105, 106, 205, 206, 206, 306, 406) sur la base d'un résultat de l'analyse des signaux reçus par les récepteurs infrarouge (101, 102, 201, 202),
dans laquelle l'adaptation (S4) comprend la fourniture des signaux de commande (211) pour les sources de lumière infrarouge (105, 106, 205, 206, 206, 306, 406) avec une modulation d'onde triangulaire d'une fréquence prédéfinie, et dans laquelle les sources de lumière infrarouge (105, 106, 205, 206, 306, 406) comprennent les diodes laser infrarouge.

8. Procédé selon la revendication 7, dans lequel l'analyse (S3) comprend l'activation séquentielle d'une seule des sources de lumière infrarouge (105, 106, 205, 206, 306, 406) et la vérification du nombre de récepteurs infrarouges (101, 102, 201, 202) qui reçoivent la lumière infrarouge émise par la source respective (105, 106, 205, 206, 306, 406).

9. Procédé selon l'une quelconque des revendications 7 et 8 précédentes, dans lequel l'analyse (S3) consiste à vérifier si les signaux reçus (212) comprennent la modulation actuellement utilisée dans le signal de commande (211) utilisé pour commander les sources de lumière infrarouge (105, 106, 205, 206, 306, 406).

10. Procédé selon l'une quelconque des revendications précédentes 7 à 9, dans lequel l'adaptation (S4) comprend la fourniture des signaux de commande (211) pour les sources de lumière infrarouge (105, 106, 205, 206, 306, 406) avec modulation de courant constant.

11. Procédé selon l'une quelconque des revendications précédentes 7 à 10, dans lequel l'adaptation (S4) comprend la fourniture des signaux de commande (211) pour les sources de lumière infrarouge (105, 106, 205, 206, 306, 406) avec une modulation à ondes carrées d'une fréquence prédéterminée.

12. Procédé selon l'une quelconque des revendications précédentes 7 à 11, dans lequel l'attaque (S1) comprend l'attaque des diodes laser infrarouges avec une source de courant constant (315, 415) et un circuit de modulation (316, 416), dans lequel la source de courant constant (315, 415) est couplée aux diodes laser infrarouge et le circuit de modulation (316, 416) est disposé dans une ligne d'alimentation des diodes laser infrarouge.
